# EUROPEAN PATENT SPECIFICATION

(11) **EP 2 143 626 B1**
(45) Date of publication and mention of the grant of the patent: **03.08.2011**
(21) Application number: 09075277.5
(22) Date of filing: 26.06.2009
(51) Int. Cl.: B62K 21/16

(54) **A direction control device and a bicycle compring such a device**
Richtungssteuerungsvorrichtung und Fahrrad, das eine solche Vorrichtung umfasst
Dispositif de contrôle de direction et bicyclette comportant un tel dispositif

(43) Date of publication of application: 13.01.2010
(73) Proprietor: Dahon and Hon Industrial Labs., Ltd., Sanchong City, Taipei County 241 (TW)
(72) Inventor: Uimonen, Joakim, Sanchong City Taipei County 241 (TW)
(74) Representative: Altenburg, Bernardus Stephanus Franciscus

(56) References cited:
- WO-A-01/68441
- DE-U1- 20 310 506
- US-A1- 2001 022 115

## Description

The present invention relates to a direction control device for a bicycle according to the preamble of claim 1 and to a bicycle comprising such a device according to claim 13.

The height and angle of a handlebar of a common bicycle are fixed, that is, not adjustable. In order to improve the comfort of riding a bicycle or to accommodate different conditions for riding a bicycle (e.g. riding a bicycle in the open country or in the city, or high speed riding), a bicycle with a height and angle adjustable handlebar has been developed.

EP patent 0736447 discloses an adjustable coupling piece used for coupling a handlebar to a steering stem of a bicycle. It is characterized in that the adjustable coupling piece comprises a body and a clamping mechanism, wherein the body comprises coupling parts. The coupling parts are coupled to the handlebar. The relative position of the handlebar can be adjusted by adjusting the clamping mechanism. However, there is only one body of the adjustable coupling piece. When a user is riding a bicycle, usually the entire weight of the upper part of his or her body presses down on the handlebar. The body of the adjustable coupling piece bearing the weight for a long time may cause fatigue damage. Also, when a bicycle accessory needs to be mounted, it is not mounted to the middle portion of the handlebar. The bicycle, then, seems unsightly and unbalanced in appearance. Moreover, if the bicycle accessory is a headlight, the light cannot illuminate the area directly in front of the bicycle.

In addition, US patent 6,584,872 discloses a handle mounting member of a bicycle. It is characterized in that the main body of the handle mounting member comprises a pair of leg sections (approximately U-shaped) that define a receiving space there between, which allows a display unit to be located within it. The main body is coupled to the handlebar and the height of the handlebar is capable of adjustment. However, the handlebar is made of two sections in order to cooperate with the main body. Also, when the height of the handlebar is being adjusted, the angle of the handlebar cannot be adjusted simultaneously due to structural limitations. The angle can be adjusted only by additionally loosening bolts. The relatively more complicated structure increases the cost, and the limitation of not having the capability to allow the user to simultaneously adjust the height and the angle of the handlebar is an inconvenience.

Therefore, it is desirable to provide a direction control device and a bicycle to mitigate and/or obviate the aforementioned problems.

### SUMMARY OF THE INVENTION

A first object of the present invention is to provide an improved direction control device for a bicycle.

Another object of the present invention is to provide a direction control device with a handlebar whose height and angle can be adjusted simultaneously.

Another object of the present invention is to provide a direction control device with a receiving space formed in the middle portion of the handlebar, which allows a bicycle accessory to be located within it.

A further object of the present invention is to increase the connection strength and stability between a handlebar and a steering stem.

A still further object of the present invention is using only one quick switch device to control the clamping state of two adjusting stems simultaneously.

It also is an object of the present invention to provide an improved bicycle.

In order to achieve the abovementioned objectives, the direction control device, which is used for controlling the direction of the front wheel, comprises the features as identified in the characterizing portion of claim 1.

According to the present invention, the quick switch device controls the clamping state of each first clamping portion and each second clamping portion simultaneously. The quick switch device comprises two eccentric quick releases. Each controls the clamping state of each first clamping portion and each second clamping portion of each adjusting stem.

### BRIEF DESCRIPTION OF THE DRAWINGS

FIG. 1 is a schematic drawing of a bicycle comprising a direction control device of the present invention.
FIG. 2 is another schematic drawing of the bicycle comprising a direction control device of the present invention showing a handlebar in a position different from that in FIG. 1.
FIG. 3 is an exploded perspective view of a direction control device of the present invention.
FIG. 4 is a perspective view of the direction control device of the present invention.
FIG. 5 is a perspective view of the direction control device of the present invention showing a bicycle accessory mounted to the handlebar.
FIG. 6 is a schematic drawing of a quick switch device of a direction control device of the present invention, showing a switch from a fastening state to a non-fastening state.
FIG. 7 is a schematic drawing showing that the position of the bicycle accessory does not have to be adjusted when the position of the handlebar of the present invention is adjusted.
FIG. 8 is a cross-sectional schematic drawing of a safety control component of a direction control device of the present invention.
FIG. 9 is a cross-sectional schematic drawing of the safety control component of a direction control device of the present invention, which shows that the quick switch device is capable of being switched from the fastening state to the non-fastening state.

### DETAILED DESCRIPTION OF THE PREFERRED EMBODIMENT

The advantages and innovative features of the invention will become more apparent from the following detailed description when taken in conjunction with the accompanying drawings.

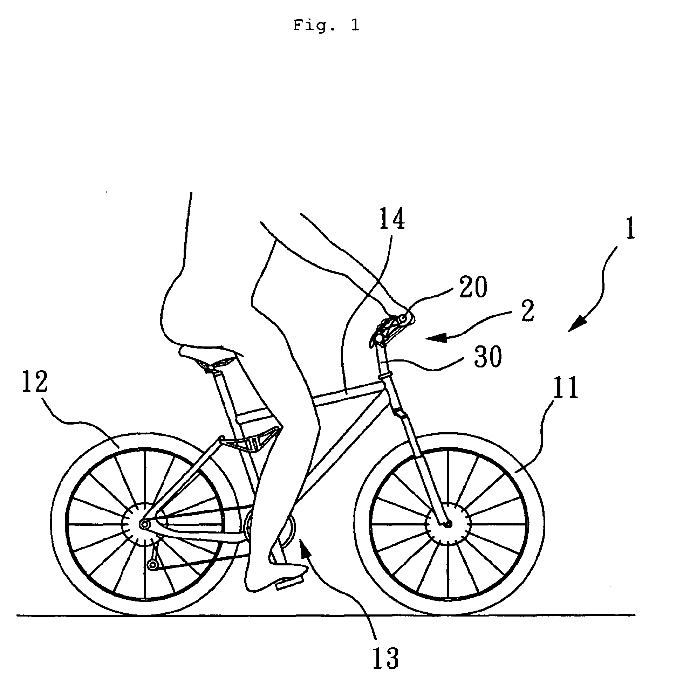

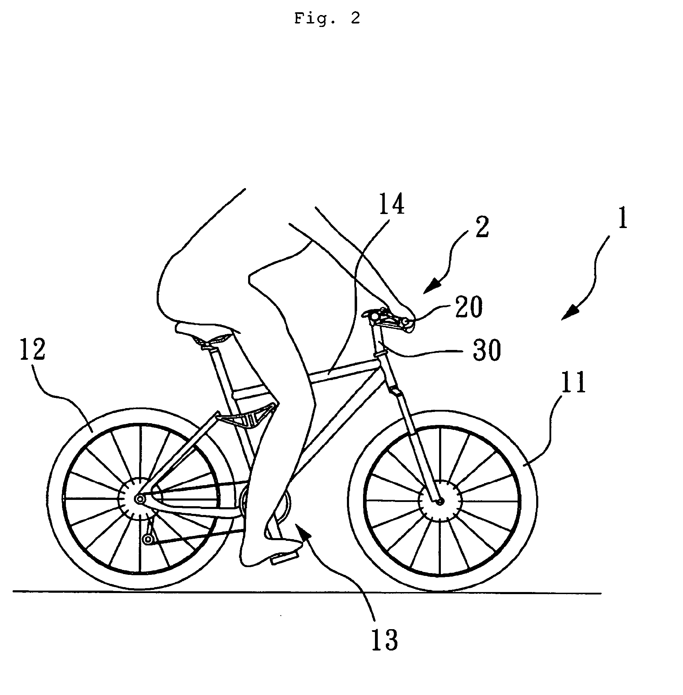

Please refer to FIG. 1 and FIG. 2 first. A bicycle 1 comprises a front wheel 11, a rear wheel 12, a pedal gear device 13, a direction control device 2, and a main frame 14, which connects the aforementioned components. The direction control device 2 is used for controlling the direction of the front wheel 11. The key point of the present invention is that the position of a handle bar 20 of the direction control device 2 can be adjusted, as shown in FIG. 1 and FIG. 2. The direction control device 2 is illustrated in the following.

Please refer to FIGS. 1-4. The direction control device 2 according to the present invention mainly comprises the handlebar 20, a steering stem 30, two adjusting stems 40, and a quick switch device 50.

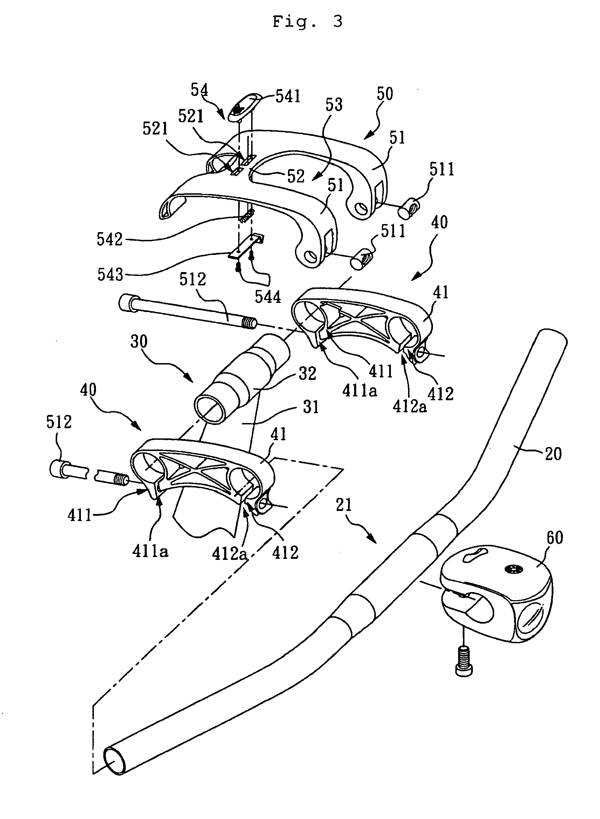

The steering stem 30 is connected to the main frame 14 (please refer to FIG. 1). As shown in FIG. 3, the steering stem 30 comprises a longitudinal rod 31 and a horizontal rod 32. The longitudinal rod 31 is connected to the horizontal rod 32. The horizontal rod 32 is substantially parallel to the handlebar 20. In the embodiments of the present invention, the longitudinal rod 31 is substantially perpendicular to the horizontal rod 32. The longitudinal rod 31 is joined to the horizontal rod 32 by a suitable means, such as soldering.

To achieve a better strength and stability between a handlebar 20 and a steering stem 30, the attaching width 40d on the handlebar 20 by two adjusting stems 40 is preferably more than 40mm which is wider than existing designs (e.g. EP patent 0736447, a single adjusting stem attaching to the bar with a width of 25mm at most ). Please note that two adjusting stem 40 with a narrow width 40d is not good to provide a good strength and stability. Therefore, comparing to EP patent 0736447, the present invention does not simply increase one more adjusting stem. EP patent 0736447 or other existing designs do not have such wide width 40d. The major reason to apply two adjusting stems 40 in the present invention is to create the enough width 40d. Each adjusting stem 40 comprises an adjusting main body 41, a first clamping portion 411, and a second clamping portion 412, wherein the first clamping portion 411 and second clamping portion 412 are located at both ends of the adjusting main body 41. Both ends of the horizontal rod 32 are clamped by each first clamping portion 411, and the handlebar 20 is clamped by each second clamping portion 412. In this embodiment, the clamping portions 411, 412 are matched to the shape of the horizontal rod 32 and the handlebar 20. The shape of the clamping portions 411, 412 is a circular hole, and each clamping portion 411, 412 comprises thin gaps 411a, 412a.

The quick switch device 50 is coupled to each adjusting stem 40 and used for controlling the clamping state of each first clamping portion 411 and each second clamping portion 412. In one embodiment of the present invention, the quick switch device 50 controls the clamping state of each first clamping portion 411 and each second clamping portion 412 simultaneously. This will be described in detail below.

The quick switch device 50 comprises two eccentric quick releases 51. Each eccentric quick release 51 comprises a pivot eccentric part 511 and a tensioning rod 512. Each pivot eccentric part 511 is located at each second clamping portion 412. Each tensioning rod 512 passes through each adjusting stem 40 and pivots the pivot eccentric part 511. Each eccentric quick release 51 controls the clamping state (two states: a fastening state and a non-fastening state) of each first clamping portion 411 and each second clamping portion 412 of each adjusting stem 40. Since the eccentric quick release 51 is a well-known design, there is no need for further description. In addition, using an eccentric quick release to control a clamp is very convenient, but eccentric quick release is not as secure as a bolt type system. Therefore, two eccentric quick releases 51 cooperating two adjusting stems 40 serve as a safer, stronger, more secure system.

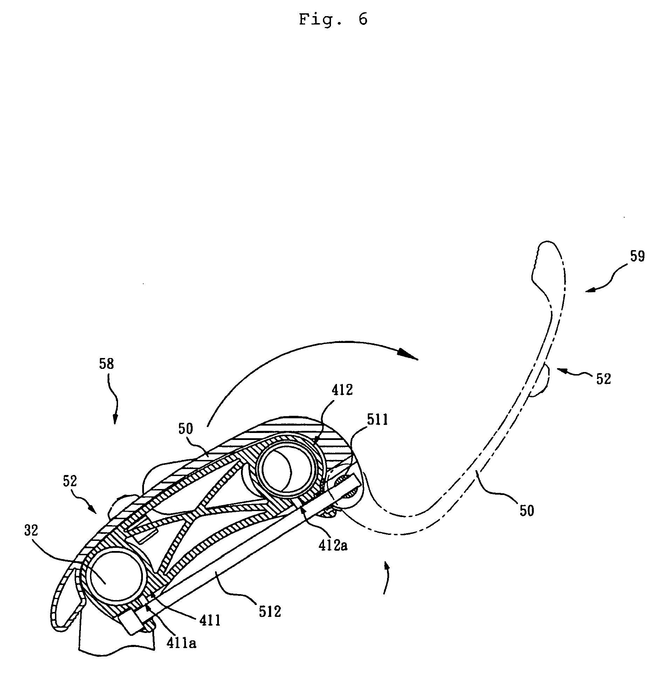

One of the features of the present invention is that the quick switch device 50 further comprises a horizontal connecting component 52 for connecting the two eccentric quick releases 51 such that the two eccentric quick releases 51 can be operated simultaneously. When a user moves the horizontal connecting component 52 upward, away from the horizontal rod 32, the relative positions of each pivot eccentric part 511, each tensioning rod 512, and each adjusting stem 40 change. This changes the width of the thin gaps 411a, 412a so that the clamping state of each first clamping portion 411 and each second clamping portion 412 becomes the non-fastening state 59, as shown in FIG. 6. When the user moves the horizontal connecting component 52 back against the horizontal rod 32, the clamping state of each first clamping portion 411 and each second clamping portion 412 returns to the fastening state 58.

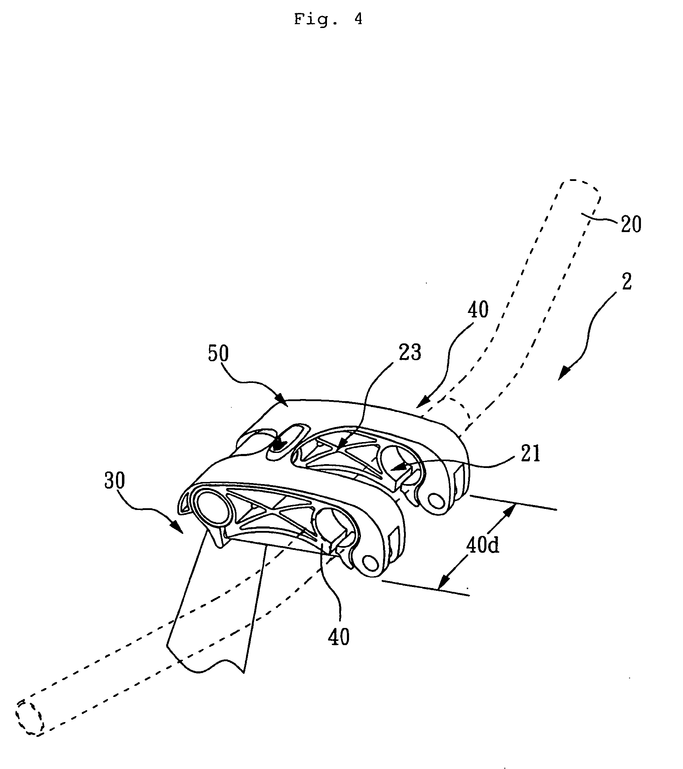

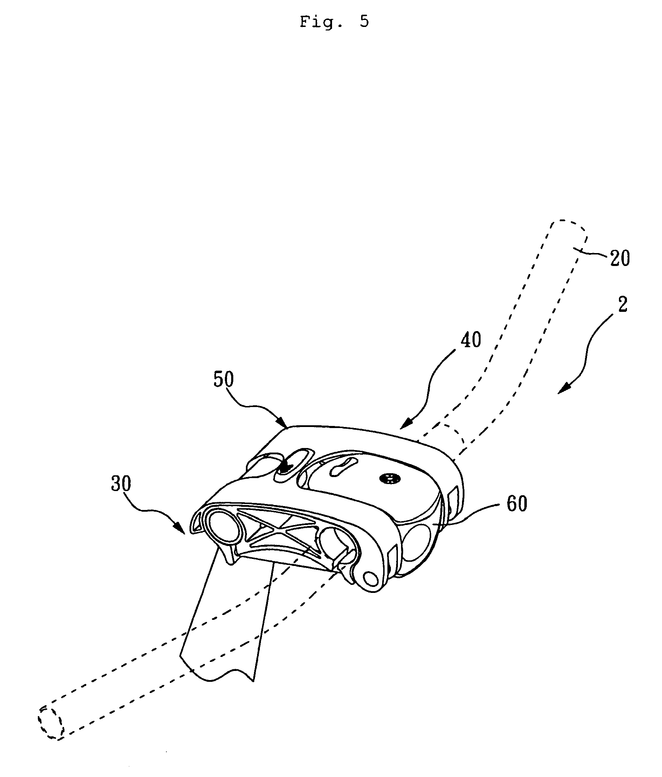

Another feature of the present invention is that there is a free space 53 formed between the horizontal connecting component 52 and the two eccentric quick releases 51 such that a receiving space 21 is formed in the middle portion of the handlebar 20 (FIG. 3 and FIG. 4). Thus, a bicycle accessory 60 (a headlight in this embodiment) can be located in the receiving space 21. Because the receiving space 21 is part of the handlebar 20, the bicycle accessory 60 can be securely mounted to the handlebar 20 conveniently. Also, the receiving space 21 is in the middle portion of the handlebar 20, thereby allowing attachment of any bicycle accessory 60 which is suitable to be located in the middle portion of the handlebar 20. Some examples are a headlight, a mileage meter, a speedometer, a photographing apparatus, a GPS device, Cell phone, PDA (personal digital assistant), other kind personal computer or only the user interface of the computer. In addition, the design of the bicycle accessory 60 is preferred to have an appearance integrated with the quick switch device 50. As shown in FIG. 5, the free space 53 of the quick switch device 50 and the receiving space 21 of the handlebar 20 allow the bicycle accessory 60 and the quick switch device 50 to have an integrated appearance.

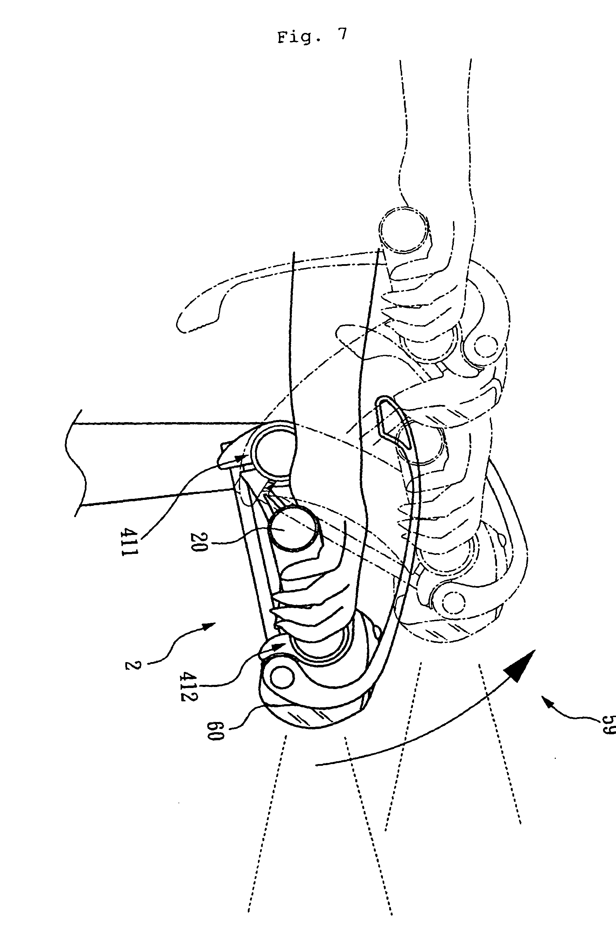

Please refer to FIG. 7. A further feature of the present invention is that when the clamping state of each first clamping portion 411 and each second clamping portion 412 is the non-fastening state 59, which allows the user to adjust the position of the handlebar 20 such that the position of the handlebar 20 changes, the user does not have to loosen or readjust the bicycle accessory 60 from the handlebar 20, even though the bicycle accessory 60 (a headlight for example) is securely mounted to the handlebar 20. The reason is illustrated as follows. At this moment, the second clamping portion 412 and the handlebar 20 are in the non-fastening state 59. When the user holds the handlebar 20 and moves it upward, the handlebar 20 rotates relative to the second clamping portion 412 such that the bicycle accessory 60 still faces the front, as shown in FIG. 7. Thus, the design of the present invention provides improved facility of use. Similarly, adjusting the handlebar 20 does not change the angle of the bicycle accessory 60 or a brake lever (not shown in figures).

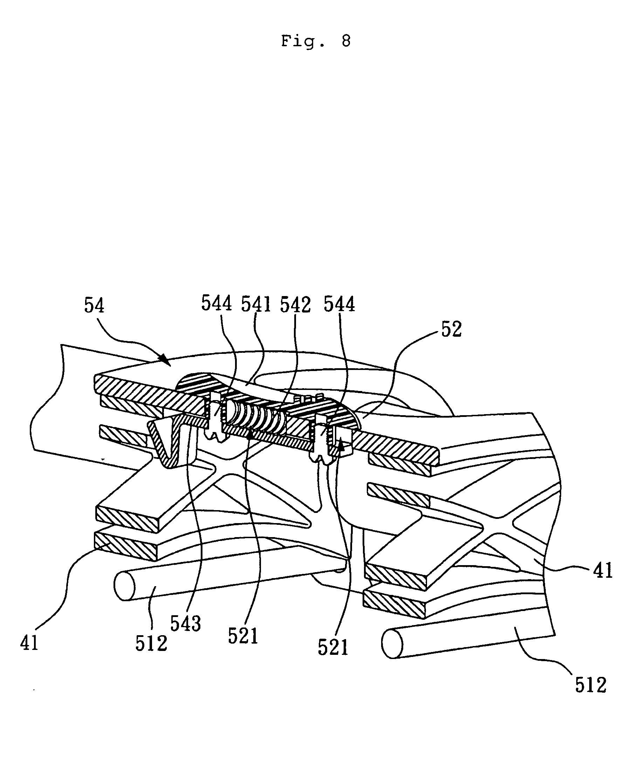

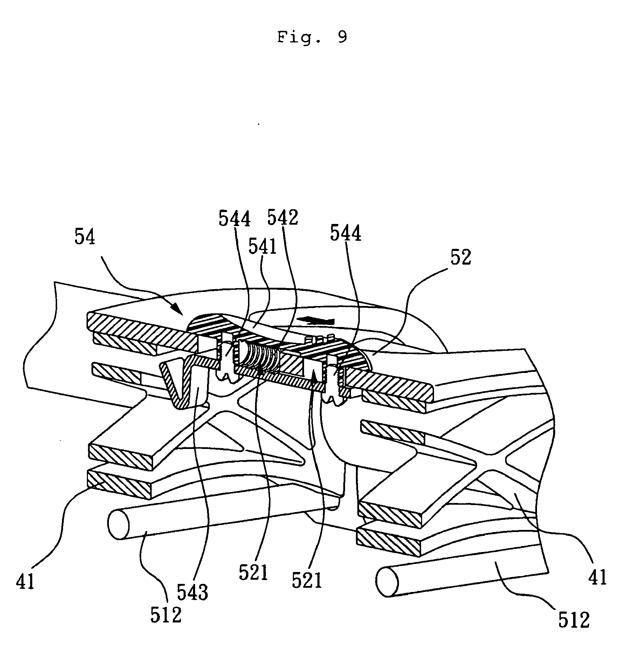

As shown in FIGS. 3, 8, and 9, in one embodiment of the present invention, the quick switch device 50 further comprises a safety control component 54. The safety control component 54 mounted on the horizontal connecting component 52 is used for controlling whether the horizontal connecting component 52 can move away from the horizontal rod 32. In other words, when the user wants to switch the quick switch device 50 from the fastening state (FIG. 8) to the non-fastening state (FIG. 9), he or she has to operate the safety control component 54 first.

In one embodiment of the present invention, the horizontal connecting component 52 comprises a plurality of through holes 521 (please also refer to FIG. 3). The safety control component 54 comprises a push bar 541, an elastic component 542 (e.g. a spring), a push plate 543, and a plurality of locking components 544. The elastic component 542 is located in one of the through holes 521. Each locking component 544 passes through the push plate 543 and each through hole 521 and is coupled to the push bar 541. As shown in FIG. 8, in the general situation, one end of the push plate 543 touches one side of one of the adjusting main bodies 41. As shown in FIG. 9, when the user wants to adjust the direction control device 2, he or she has to push the push bar 541 aside first to move the push plate 543 away from the adjusting main body 41, such that the horizontal connecting component 52 can be moved upward, away from the horizontal rod 32. When the user stops exerting force on the push bar 541, the push bar 541 and the push plate 543 return to the original position due to the elastic restoring force of the elastic component 542. This design prevents an undesired switch of the quick switch device 50 from the fastening state to the non-fastening state.

It is noted that the above-mentioned embodiments are only for illustration. It is intended that the present invention covers modifications and variations of this invention provided they fall within the scope of the following claims Therefore, it will be apparent to those skilled in the art that various modifications and variations can be made to the structure of the present invention without departing from the scope of the invention defined in the claims.

## Claims

1. A direction control device (2) for controlling the direction of a front wheel (11) of a bicycle, wherein the direction control device (2) comprises:
a handlebar (20) ;
a steering stem (30) to be connected to the main frame (14), wherein the steering stem (30) comprises a longitudinal rod (31) and a horizontal rod (32), the longitudinal rod (31) being joined to the horizontal rod (32), the horizontal rod (32) being substantially parallel to the handlebar (20); and
adjusting means (40) comprising an adjusting main body (41) that comprises a first clamping portion (411) and a second clamping portion (412), wherein the first clamping portion (411) and the second clamping portion (412) are located at both ends of the adjusting main body (41), and
an end of the horizontal rod (32) is clamped by the first clamping portion (411) with two clamping states: a fastening state (58) and a non-fastening state (59);
the handlebar (20) is clamped by the second clamping portion (412) with two clamping states: a fastening state (58) and a non-fastening state (59),
**characterized in that** the adjusting means comprises:
two adjusting stems (40), each of the adjusting stems (40) comprising an adjusting main body (41), a first clamping portion (411), and a second clamping portion (412), wherein the first clamping portion (411) and the second clamping portion (412) are located at both ends of the adjusting main body (41), and
both ends of the horizontal rod (32) are clamped by each first clamping portion (411) with two clamping states: a fastening state (58) and a non-fastening state (59);
the handlebar (20) is clamped by each second clamping portion (412) with two clamping states: a fastening state (58) and a non-fastening state (59); and
a quick switch device (50) coupled to each adjusting stem (40), the quick switch device (50) being used for controlling the clamping state of each first clamping portion (411) and each second clamping portion (412) simultaneously.

2. A direction control device (2) as claimed in claim 1, wherein the attaching width on the handlebar (20) by two adjusting stems (40) is more than 40mm.

3. A direction control device (2) as claimed in claim 2, wherein the quick switch device (50) comprises two eccentric quick releases (51), each eccentric quick release (51) controlling the clamping state of each first clamping portion (411) and each second clamping portion (412) of each adjusting stem (40).

4. A direction control device (2) as claimed in claim 3, wherein each eccentric quick release (51) comprises a pivot eccentric part (511) and a tensioning rod (512), and each pivot eccentric part (511) is located at each second.clamping portion (412).

5. A direction control device (2) as claimed in claim 4, wherein the quick switch device (50) comprises a horizontal connecting component (52) for connecting the two eccentric quick releases (51) such that the two eccentric quick releases (51) can be operated simultaneously; when the horizontal connecting component (52) is away from the horizontal rod (32), the clamping state of each of the first clamping portions (411) and each of the second clamping portions (412) is the non-fastening state (59), and when the horizontal connecting component (52) is close to the horizontal rod (32), the clamping state of each of the first clamping portions (411) and each of the second clamping portions (412) is the fastening state (58).

6. A direction control device (2) as claimed in claim 5, wherein the quick switch device (50) further comprises a safety control component (54) mounted on the horizontal connecting component (52), the safety control component (54) being used for controlling whether the horizontal connecting component (52) can be away from the horizontal rod (32).

7. A direction control device (2) as claimed in claim 6, wherein there is a free space (53) formed between the horizontal connecting component (52) and the two eccentric quick releases (51) such that a receiving space (21) is formed in the middle portion of the handlebar (20).

8. A direction control device (2) as claimed in claim 7, wherein the handlebar (20) further comprises a bicycle accessory (60) located in the receiving space (21), for example a headlight (60).

9. A direction control device (2) as claimed in claim 5, wherein the longitudinal rod (31) is joined to the horizontal rod (32) by means of soldering.

10. A direction control device (2) as claimed in claim 9, wherein the quick switch device (50) comprises two eccentric quick releases (51), each eccentric quick release (51) comprising a pivot eccentric part (511) and a tensioning rod (512), each pivot eccentric part (511) being located at each second clamping portion (412), and each eccentric quick release (51) controlling the clamping state of each first clamping portion (411) and each second clamping portion (412) of each adjusting stem (40).

11. A direction control device (2) as claimed in claim 10, wherein the quick switch device (50) comprises a horizontal connecting component (52) for connecting the two eccentric quick releases (51) such that the two eccentric quick releases (51) can be operated simultaneously; when the horizontal connecting component (52) is away from the horizontal rod (32), the clamping state of each of the first clamping portions (411) and each of the second clamping portions (412) is the non-fastening state (59), and when the horizontal connecting component (52) is close to the horizontal rod (32), the clamping state of each of the first clamping portions (411) and each of the second clamping portions (412) is the fastening state (58).

12. A direction control device (2) as claimed in claim 11, wherein the quick switch device (50) further comprises a safety control component (54) mounted on the horizontal connecting component (52), the safety control component (54) being used for controlling whether the horizontal connecting component (52) can be away from the horizontal rod (32).

13. A bicycle (1) comprising a front wheel (11), a rear wheel (12), a pedal gear device (13), and a main frame (14), which connects the aforementioned components, **characterized in that** the bicycle further comprises a direction control device (2) according to any of the preceding claims, being used for controlling the direction of the front wheel (11).

## Patentansprüche

1. Richtungssteuerungsvorrichtung (2) zur Steuerung der Richtung eines Vorderrades (11) eines Fahrrades, wobei die Richtungssteuerungsvorrichtung umfasst:
Eine Lenkstange (20);
Einem Lenkvorbau (30), welcher mit dem Hauptrahmen (14) verbindbar ist, wobei der Lenkvorbau (30) eine Längsstange (31) und eine horizontale Stange (32) umfasst, die Längsstange (31) mit der horizontalen Stange (32) verbunden ist, die horizontale Stange (32) im Wesentlichen parallel zur Lenkstange (20) verläuft; und
Justiermittel (40), umfassend einen Hauptjustierkörper (41), welcher ein erstes Klemmteil (411) und ein zweites Klemmteil (412) umfasst, wobei sich das erste Klemmteil (411) und das zweite Klemmteil (412) an beiden Enden des Hauptjustierkörpers (41) befinden, und
ein Ende der horizontalen Stange (32) von dem ersten Klemmteil (411) eingeklemmt ist mit zwei Klemmzuständen: einem Justierzustand (58) und einem gelösten Zustand (59),
**dadurch gekennzeichnet, dass** die Justiermittel umfassen:
zwei Justierbolzen (40), wobei jeder der Justierbolzen (40) einen Hauptjustierkörper (41), ein erstes Klemmteil (411) und ein zweites Klemmteil (412) umfasst,
wobei sich das erste Klemmteil (411) und das zweite Klemmteil (412) an beiden Enden des Hauptjustierkörpers (41) befinden, und
beide Enden der horizontalen Stange (32) durch die jeweils ersten Klemmteile (411) mit zwei Klemmzuständen eingeklemmt sind: einem Befestigungszustand (58) und einem gelösten Zustand (59);
die Lenkstange (20), welche von jedem zweiten Klemmteil (412) mit zwei Klemmzuständen eingeklemmt ist: einem Befestigungszustand (58) und einem gelösten Zustand (59); und
einem Schnellverschluss (50), welcher mit jedem Justierteil (40) verbunden ist, wobei der Schnellverschluss (50) die Klemmzustände jedes der ersten Klemmteile (411) und jedes der zweiten Klemmteile (412) gleichzeitig steuert.

2. Richtungssteuerungsvorrichtung (2) nach Anspruch 1, wobei der Befestigungsabstand der beiden Justierteile (40) an der Lenkstange (20) mehr als 40 mm beträgt.

3. Richtungssteuerungsvorrichtung (2) nach Anspruch 2, wobei der Schnellverschluss (50) zwei exzentrische Schnellauslöser (51) umfasst, wobei jeder exzentrische Schnellauslöser (51) die Klemmzustände jedes der ersten Klemmteile (411) und jedes der zweiten Klemmteile (412) jedes Justierteiles (40) steuert.

4. Richtungssteuerungsvorrichtung (2) nach Anspruch 3, wobei jeder exzentrische Schnellauslöser (51) einen exzentrischen Drehzapfen (511) und eine Spannstange (512) umfasst, und jeder exzentrische Drehzapfen (511) an jedem zweiten Klemmteil (412) angeordnet ist.

5. Richtungssteuerungsvorrichtung (2) nach Anspruch 4, wobei der Schnellverschluss (50) ein horizontales Verbindungselement (52) aufweist, um die zwei exzentrischen Schnellauslöser (51) so zu verbinden, dass die beiden exzentrischen Schnellauslöser (51) gleichzeitig bedienbar sind; wenn das horizontale Verbindungselement (52) nicht im Eingriff mit der horizontalen Stange (32) ist, ist der Klemmzustand jedes der ersten Klemmteile (411) und jedes der zweiten Klemmteile (412) der gelöste Zustand (59), und wenn das horizontale Verbindungselement (52) nahe der horizontalen Stange (32) ist, ist der Klemmzustand jedes der ersten Klemmteile (411) und jedes der zweiten Klemmteile (412) der Befestigungszustand (58).

6. Richtungssteuerungsvorrichtung (2) nach Anspruch 5, wobei der Schnellverschluss (50) weiterhin eine Sicherheitssteuerung (54) umfasst, welche an dem horizontalen Verbindungselement (52) befestigt ist, wobei die Sicherheitssteuerung (54) zur Steuerung der Lösbarkeit des horizontalen Verbindungselements (52) von der horizontalen Stange (32) dient.

7. Richtungssteuerungsvorrichtung (2) nach Anspruch 6, wobei ein freier Raum (53) zwischen dem horizontalen Verbindungselement (52) und den zwei exzentrischen Schnellauslösern (51) gebildet wird, so dass ein Aufnahmeraum (21) in der Mitte der Lenkstange (20) gebildet wird.

8. Richtungssteuerungsvorrichtung (2) nach Anspruch 7, wobei die Lenkstange (20) weiterhin ein Fahrradzubehör (60) umfasst, welches in dem Aufnahmeraum (21) angeordnet ist, beispielsweise ein Vorderlicht (60).

9. Richtungssteuerungsvorrichtung (2) nach Anspruch 5, wobei die Längsstange (31) mit der horizontalen Stange (32) durch Löten verbunden ist.

10. Richtungssteuerungsvorrichtung (2) nach Anspruch 9, wobei der Schnellverschluss (50) zwei exzentrische Schnellauslöser (51) umfasst, wobei jeder exzentrische Schnellauslöser (51) einen exzentrischen Drehzapfen (511) und eine Spannstange (512) umfasst, jeder exzentrische Drehzapfen (511) an jedem zweiten Klemmteil (412) angeordnet ist, und jeder exzentrische Schnellauslöser (51) den Befestigungszustand jedes ersten Klemmteils (411) und jedes zweiten Klemmteils (412) jedes Justierteiles (40) steuert.

11. Richtungssteuerungsvorrichtung (2) nach Anspruch 10, wobei der Schnellverschluss (50) ein horizontales Verbindungselement (52) umfasst, um die beiden exzentrischen Schnellauslöser (51) so zu verbinden, dass die beiden exzentrischen Schnellauslöser (51) gleichzeitig bedienbar sind; wenn das horizontale Verbindungselement (52) nicht im Eingriff mit der horizontalen Stange (32) ist, ist der Klemmzustand jedes der ersten Klemmteile (411) und jedes der zweiten Klemmteile (412) der gelöste Zustand (59), und wenn das horizontale Verbindungselement (52) nahe der horizontalen Stange (32) ist, ist der Klemmzustand jedes der ersten Klemmteile (411) und jedes der zweiten Klemmteile (412) der Befestigungszustand (58).

12. Richtungssteuerungsvorrichtung (2) nach Anspruch 11, wobei der Schnellverschluss (50) weiterhin eine Sicherheitssteuerung (54) umfasst, welche an dem horizontalen Verbindungselement (52) befestigt ist, wobei die Sicherheitssteuerung (54) zur Steuerung der Lösbarkeit des horizontalen Verbindungselements (52) von der horizontalen Stange (32) benutzt wird.

13. Ein Fahrrad (1) umfassend ein Vorderrad (11), ein Hinterrad (12), ein Pedalgetriebe (13) und einen Hauptrahmen (14), welcher die vorgenannten Teile verbindet,
**dadurch gekennzeichnet, dass**
das Fahrrad weiterhin eine Richtungssteuerungsvorrichtung (2) nach einem der vorhergehenden Ansprüche umfasst, zur Steuerung der Richtung des Vorderrades (11).

## Revendications

1. Un dispositif (2) de commande de direction pour commander la direction d'une roue avant (11) d'une bicyclette, dans lequel le dispositif (2) de commande de direction comprend :
un guidon (20) ;
une tige de direction (30) destinée à être reliée au cadre principal (14), la tige de direction (30) comprenant une tige longitudinale (31) et une tige horizontale (32), la tige longitudinale (31) étant reliée à la tige horizontale (32), la tige horizontale (32) étant sensiblement parallèle au guidon (20), et
des moyens de réglage (40) comprenant un corps principal de réglage (41) qui comprend une première partie de serrage (411) et une seconde partie de serrage (412), la première partie de serrage (411) et la seconde partie de serrage (412) étant situées à deux extrémités du corps principal de réglage (41), et
une extrémité de la tige horizontale (32) est fixée par la première partie de serrage (411) selon deux états de serrage : un état de fixation (58) et un état de non-fixation (59) ;
le guidon (20) est bloqué par la seconde partie de serrage (412) selon deux états de serrage : un état de fixation (58) et un état de non-fixation (59),
**caractérisé en ce que** les moyens de réglage comprennent :
deux tiges de réglage (40), chacune des tiges de réglage (40) comprenant un corps principal de réglage (41), une première partie de serrage (411), et une seconde partie de serrage (412),
la première partie de serrage (411) et la seconde partie de serrage (412) étant situées aux deux extrémités du corps principal de réglage (41), et
les deux extrémités de la tige horizontale (32) sont fixées par chaque première partie de serrage (411) selon deux états de serrage : un état de fixation (58) et un état de non-fixation (59) ;
le guidon (20) est fixé par chaque seconde partie de serrage (412) selon deux états de serrage : un état de fixation (58) et un état de non-fixation (59), et
un dispositif de commutation rapide (50) couplé à chaque tige de réglage (40), le dispositif de commutation rapide (50) étant utilisé pour commander l'état de serrage de chaque première partie de serrage (411) et de chaque seconde partie de serrage (412) simultanément.

2. Un dispositif (2) de commande de direction selon la revendication 1, dans lequel la largeur de fixation sur le guidon (20) par deux tiges de réglage (40) est de plus de 40 mm.

3. Un dispositif (2) de commande de direction selon la revendication 2, dans lequel le dispositif de commutation rapide (50) comprend deux organes de desserrage rapide excentriques (51), chaque organe de desserrage rapide excentrique (51) commandant de l'état de serrage de chaque première partie de serrage (411) et de chaque seconde partie de serrage (412) de chaque tige de réglage (40).

4. Un dispositif (2) de commande de direction selon la revendication 3, dans lequel chaque organe de desserrage rapide excentrique (51) comprend une partie excentrique formant pivot (511) et une tige de tension (512), et chaque partie excentrique formant pivot (511) est située au niveau de chaque seconde partie de serrage (412).

5. Un dispositif (2) de commande de direction selon la revendication 4, dans lequel le dispositif de commutation rapide (50) comprend un composant de connexion horizontal (52) destiné à être connecté aux deux organes de desserrage rapide excentriques (51) de telle sorte que les deux organes de desserrage rapide excentriques (51) peuvent être utilisés simultanément; lorsque le composant de connexion horizontal (52) est loin de la tige horizontale (32), l'état de serrage de chacune des premières parties de serrage (411) et de chacune des secondes parties de serrage (412) est l'état de non-fixation (59), et lorsque le composant de connexion horizontal (52) est proche de la tige horizontale (32), l'état de serrage de chacune des premières parties de serrage (411) et de chacune des secondes parties de serrage (412) est l'état de fixation (58).

6. Un dispositif (2) de commande de direction selon la revendication 5, dans lequel le dispositif de commutation rapide (50) comprend en outre un composant de commande de sécurité (54) monté sur le composant de connexion horizontal (52), le composant de commande de sécurité (54) étant utilisé pour déterminer si le composant de connexion horizontal (52) peut être placé loin de la tige horizontale (32).

7. Un dispositif (2) de commande de direction selon la revendication 6, dans lequel il ya un espace libre (53) formé entre le composant de connexion horizontal (52) et les deux organes de desserrage rapide excentriques (51), de telle sorte qu'un espace de réception (21) soit formé dans la partie centrale du guidon (20).

8. Un dispositif (2) de commande de direction selon la revendication 7, dans lequel le guidon (20) comprend en outre un accessoire de vélo (60) situé dans l'espace de réception (21), par exemple un phare (60).

9. Un dispositif (2) de commande de direction selon la revendication 5, dans lequel la tige longitudinale (31) est reliée à la tige horizontale (32) au moyen d'une soudure.

10. Un dispositif (2) de commande de direction selon la revendication 9, dans lequel le dispositif de commutation rapide (50) comprend deux organes de desserrage rapide excentriques (51), chaque organe de desserrage rapide excentrique (51) comprenant une partie excentrique formant pivot (511) et une tige de tension ( 512), chaque partie excentrique formant pivot (511) étant située à chaque seconde partie de serrage (412), et chaque organe de desserrage rapide excentrique (51) commandant l'état de serrage de chaque première partie de serrage (411) et de chaque seconde partie de serrage (412) de chaque tige de réglage (40).

11. Un dispositif (2) de commande de direction selon la revendication 10, dans lequel le dispositif de commutation rapide (50) comprend un composant de connexion horizontal (52) destiné à être relié aux deux organes de desserrage rapide excentriques (51), de telle sorte que les deux organes de desserrage rapide excentriques (51) puissent être actionnés simultanément ; lorsque le composant de connexion horizontal (52) est loin de la tige horizontale (32), l'état de serrage de chacune des premières parties de serrage (411) et de chacune des secondes parties de serrage (412) est l'état de non-fixation (59), et lorsque le composant de connexion horizontal (52) est proche de la tige horizontale (32), l'état de serrage de chacune des premières parties de serrage (411) et de chacune des secondes parties de serrage (412) est l'état de fixation (58).

12. Un dispositif (2) de commande de direction selon la revendication 11, dans lequel le dispositif de commutation rapide (50) comprend en outre un composant de commande de sécurité (54) monté sur le composant de connexion horizontal (52), l'organe de commande de sécurité (54) étant utilisé pour déterminer si le composant de connexion horizontal (52) peut être loin de la tige horizontale (32).

13. Un vélo (1) comprenant une roue avant (11), une roue arrière (12), un dispositif formant pédalier (13), et un cadre principal (14), qui relie les éléments précités, **caractérisé en ce que** la bicyclette comprend en outre un dispositif (2) de commande de direction selon l'une quelconque des revendications précédentes, utilisé pour commander la direction de la roue avant (11).
